# EUROPÄISCHE PATENTSCHRIFT

(11) **EP 3 323 606 B1**
(45) Veröffentlichungstag und Bekanntmachung des Hinweises auf die Patenterteilung: **08.07.2020**
(21) Anmeldenummer: 16207003.1
(22) Anmeldetag: 27.12.2016
(51) Int. Cl.: B32B 5/02, B32B 7/12, B32B 27/08, B32B 27/10, B32B 27/12, B32B 27/32, B32B 27/36, B32B 29/06, B32B 3/26

(54) **TRENNVERBUND**
SEPARATION COMPOSITE
COMPOSITE DE SÉPARATION

(30) Priorität: 18.11.2016 EP 16199568
(43) Veröffentlichungstag der Anmeldung: 23.05.2018
(73) Patentinhaber: Mondi AG, 1030 Wien (AT)
(72) Erfinder: HELLER, Herbert, 83098 Brannenburg (DE); LACKNER, Andrea, 8051 Graz (AT); VAN DER DONCK, Jürgen, 2850 Boom (BE); KREKEL, Rolf, Raubling (DE)
(74) Vertreter: Lorenz, Bernd Ingo Thaddeus

(56) Entgegenhaltungen:
- EP-A2- 0 864 415
- WO-A1-02/094556
- US-A- 5 728 469
- US-B1- 6 521 312

## Beschreibung

Die Erfindung betrifft einen Trennverbund zur ablösbaren Aufnahme einer klebenden Bahn mit einer ersten und einer zweiten Deckschicht und einer zwischen den beiden Deckschichten einkaschierten Kernschicht aus einem Fasermaterial, insbesondere Papier, wobei zumindest die erste Deckschicht eine außenliegende Beschichtung aus einem Trennmittel aufweist und wobei die Kernschicht ein Flächengewicht von höchstens 150 g/m² aufweist.

Derartige Trennverbunde werden auch als Release-Liner-Verbund bezeichnet und verhindern durch ihre hervorragenden Ablöseeigenschaften das Verkleben kleberbeschichteter bahnen- oder bogenförmiger Materialien gegen sich selbst oder gegen andere Materialien. Des Weiteren dient der Trennverbund in der Regel auch einem Oberflächenschutz und teils auch als Stabilisierung. Diese hervorragenden Ablöseeigenschaften werden zumeist durch die Beschichtung einer außenliegenden Seite der Deckschicht aus Silikon erreicht.

Die verwendeten Silikone werden mittels eines Vernetzers und in Gegenwart eines Katalysators entweder thermisch bei Temperaturen größer als 100° C oder unter UV-Licht polymerisiert. Durch die Beimischung bestimmter Harze können die Trenneigenschaften des Trennverbundes zusätzlich genau auf die gewünschte Anwendung eingestellt werden.

Die Kernschicht ist vorzugsweise aus Papier gebildet, wobei insbesondere satinierte Papiere Anwendung finden. Der Trennverbund wird bei einer Kernschicht aus Papier auch als Trennpapierverbund bezeichnet.

Unter satinierten Papieren versteht man eine Papiersorte, die beidseitig durch Walzen geglättet wurde und daher eine besonders niedrige Rauigkeit aufweist.

Der erfindungsgemäße Trennverbund ist vorrangig dafür vorgesehen, großflächig bedruckte, vorzugsweise selbstklebende, Folien aufzunehmen. Beispielsweise lassen sich in der Werbebranche hiermit Busse oder Flugzeuge großflächig bekleben. Eine andere Anwendungsmöglichkeit stellt das Bekleben von Schildern und Hinweistafeln dar. Das Anwendungsgebiet wird auch als Graphic Arts Market bezeichnet. Derartige Trennverbunde eignen sich auch für klassische Klebebänder oder für die Fertigung von faserverstärkten Composites.

Aus der Praxis ist es bekannt, für diesbezügliche Anwendungen eine aus Papier gebildete Kernschicht einseitig, vorzugsweise aber beidseitig, mit einer Deckschicht aus Polyethylen zu überziehen, wobei eine der Polyethylenschichten zusätzlich eine Beschichtung aus einem Trennmaterial aufweist. Problematisch bei einem solchen Trennpapierverbund ist allerdings, dass die Luftfeuchtigkeit über die offenen Kanten des Trennpapierverbundes eindringen kann, wodurch die dortigen Papierfasern quellen und an Volumen gewinnen. Dies führt dazu, dass der Trennpapierverbund an den Rändern aufwellt oder sich in Querrichtung ausdehnt. Um diesen Effekten entgegenzuwirken, wird für die Kernschicht in der Regel ein relativ voluminöses Papier mit einem Flächengewicht von mehr als 100 g/m² verwendet. Aufgrund dieses hohen Flächengewichtes lässt sich durch die Steifigkeit der Kernschicht die Neigung des Trennpapierverbundes zur Ausbildung einer Randwelligkeit in gewissem Maße verringern. Dies hat allerdings zur Folge, dass dieser Vorteil durch einen relativ dicken Trennpapierverbund erkauft wird. In wirtschaftlicher Hinsicht ist dies nachteilig, da weniger Laufmeter Trennpapierverbund auf einer Bandrolle bereitgestellt werden können. Insgesamt ergeben sich auch relativ große Abfallmengen des nach der Benutzung, das heißt dem Abziehen von dem geschützten Gegenstand bzw. vor der geschützten Fläche zu entsorgenden Trennpapierverbundes. Schließlich trägt das relativ hohe Gewicht auch zu einer nachteiligen Handhabung sowie hohen Transportkosten bei.

Darüber hinaus führen die eher dünnen Polyethylenschichten dazu, dass sich die Oberflächenstruktur des Papiers auf der Oberfläche des Trennpapierverbundes abzeichnet. Dies zeigt sich in einer Art von "Orangenhaut-Struktur" auf der Oberfläche des Trennpapierverbundes.

Aus diesem Grunde haben sich in der Praxis bereits auch andere Arten von Trennverbunden bzw. Trennpapierverbunden als zweckmäßig herausgestellt.

Aus der US 6521312 B1 ist ein dreischichtiges Laminat bekannt, wobei die Innenlage aus Polyolefin und die beiden Außenschichten aus Polyethylenterephthalat bestehen. Hierdurch soll eine Alternative zu den üblicherweise eine Kernschicht aus Papier aufweisenden Trennpapierverbunden bereitgestellt werden.

Die EP 864 415 A2 lehrt ein In-Line-Verfahren zum Kaschieren von einem mit Silikon beschichteten Polyesterfilm mit einem Papier und einem mit diesem Verfahren hergestellten Trennpapierverbund. Der Trennpapierverbund besteht aus einer Polymerlage z. B. aus orientiertem Polyethylenterephthalat (O-PET) und einer Celluloselage z. B. Papier. Es findet allerdings lediglich eine einseitige Kaschierung des Papiers mit der orientierten PET-Folie statt.

Im Gegensatz dazu lehrt die EP 1 401 643 A1 eine beidseitig beschichtete Kernschicht aus Papier, wobei die Deckschichten jeweils aus einer zweilagigen, coextrudierten Beschichtung aus Polyethylen und Polypropylen gebildet sind.

Aus der US 5 728 469 A ist ein Trennverbund bekannt, der entgegen der gattungsgemäßen, eingangs beschriebenen Ausgestaltung auf zumindest der ersten Deckschicht keine außenliegende Beschichtung aus einem Trennmittel aufweist. Im Gegensatz zu der gattungsgemäßen Ausgestaltung sollen in zumindest eine der Deckschichten durch ein Copolymer Silikonverbindungen direkt in die Molekülstruktur des Polymer-Materials eingebracht werden, so dass Release-Eigenschaften ohne eine separate Beschichtung realisiert werden. Es ist somit ein spezieller Kunststoff mit Silikonverbindungen vorzusehen, wobei eine Orientierung einer solchen Deckschicht nicht vorgesehen ist und insbesondere auch im Hinblick auf die Silikonverbindungen zu unerwünschten Veränderungen der Release-Eigenschaften führen könnte.

Ausgehend von den bereits aus der Praxis bekannten Trennverbunden liegt der vorliegenden Erfindung die Aufgabe zugrunde, einen kostengünstigen und dünnen Trennpapierverbund bereitzustellen, der drüber hinaus eine hohe Oberflächengüte und eine geringe Neigung zum Aufquellen oder Aufwellen der Randbereiche aufweist. Des Weiteren soll ein Verfahren zur Herstellung des Trennpapierverbundes angegeben werden.

Diese Aufgabe wird gelöst durch einen Trennverbund gemäß Anspruch 1 sowie ein Verfahren nach Anspruch 11.

Ausgehend von einem gattungsgemäßen Trennverbund mit einer zwischen zwei Deckschichten einkaschierten Kernschicht aus einem Fasermaterial, insbesondere Papier, wird für die Deckschichten anstelle des üblicherweise in der Praxis verwendeten Polyethylens ein orientiertes Polymer verwendet und gleichzeitig die Kernschicht derart ausgestaltet, dass das verwendete Fasermaterial ein Flächengewicht von höchstens 150 g/m², insbesondere 100 g/m² aufweist. Dabei geht die Erfindung von der Erkenntnis aus, dass durch die Verwendung von orientierten Polymeren die Steifigkeit derart erhöht wird, dass trotz Verwendung eines relativ dünnen Fasermaterials, insbesondere Papiers der Trennverbund eine reduzierte Neigung zur Ausbildung einer Randwelligkeit oder einer Querdehnung aufweist. Darüber hinaus sinkt durch den Einsatz eines vergleichsweise dünnen Fasermaterials, insbesondere Papiers auch die Neigung der Kernschicht über die Außenkanten der Bahn Feuchtigkeit aufzunehmen.

Unter orientierten Polymeren versteht man grundsätzlich Polymere mit langen Molekülketten, die in Form von Folien oder Fäden vorliegen und mechanisch verstreckt wurden. Während Polymere im festen Zustand in der Regel teilkristallin vorliegen, also folglich amorphe und kristalline Bereiche aufweisen, werden durch das mechanische Verstrecken die amorphen Polymerketten in die Verstreckrichtung orientiert. Dadurch entsteht eine teilkristalline, orientierte Überstruktur. Die Folge ist, dass die so verstreckte Folie in Verstreckrichtung eine wesentlich höhere Festigkeit aufweist als im unverstreckten Zustand. Zudem nehmen auch die Steifigkeit, insbesondere die Biegesteifigkeit und die Temperaturbeständigkeit zu.

Grundsätzlich ist es auch möglich, eine Folie sowohl in Längs- als auch in Querrichtung zu verstrecken, so dass die Folie folglich aus einem biaxial orientierten Polymer besteht. Die Orientierung kann mit Hilfe von Polarisationsmikroskopie sichtbar gemacht werden. So lässt sich mit Hilfe eines ausreichend vergrößernden Mikroskops die Polymerstruktur sichtbar machen. Ein unorientiertes Polymer weist im Vergleich zu einem orientierten Polymer einen sehr viel höheren Anteil ineinander verschlungener Polymerketten auf, ohne dass eine bevorzugte Orientierung in eine bestimmte Richtung erkennbar ist.

In einer bevorzugten Ausführung der Erfindung besteht die erste und/oder die zweite Deckschicht aus biaxial orientiertem Polyethylenterephthalat (PET) und weist eine Schichtdicke im Bereich von 6 µm bis 30 µm, insbesondere 9 µm bis 15 µm auf. Hierbei ist die Erfindung allerdings nicht auf den genannten Bereich begrenzt, so dass darüber hinaus auch höhere oder niedrige Schichtdicken möglich sind. Grundsätzlich stellen diese Schichtdicken aber einen bevorzugten Bereich der Erfindung dar.

Polyethylenterephthalat (PET) weist insbesondere im orientierten Zustand gegenüber Polyethylen (PE) eine deutlich höhere Festigkeit und Steifigkeit auf. Somit lässt sich durch die Verwendung von PET für die beiden Deckschichten die Neigung des Trennpapierverbundes zur Ausbildung von Randwelligkeiten und Querdehnungen deutlich vermindern.

In einer alternativen Ausgestaltung der Erfindung bestehen die erste und/oder die zweite Deckschicht aus biaxial orientiertem Polypropylen (PP) und weisen eine Schichtdicke von 15 µm bis 40 µm, insbesondere 15 µm bis 30 µm auf. Auch hierbei handelt es sich lediglich um einen bevorzugten Schichtdickenbereich, der die Erfindung in keinster Weise begrenzt.

Wenngleich Polypropylen eine höhere Festigkeit als Polyethylen aufweist, so ist die Festigkeit dennoch geringer als bei Polyethylenterephthalat. Entsprechend muss die Schichtdicke im Vergleich zu einer Folie aus Polyethylenterephthalat größer gewählt werden.

Die Erfindung umfasst somit die Möglichkeiten die beiden Deckschichten aus einer orientierten Polymerfolie aus Polyethylenterephthalat oder Polypropylen auszubilden. Es liegt aber auch grundsätzlich im Rahmen der Erfindung die beiden Deckschichten jeweils aus einem unterschiedlichen Polymer herzustellen, wobei eine der Deckschichten aus Polypropylen und die andere aus Polyethylenterephthalat besteht. Hierbei ist es möglich, dass die erste oder die zweite Deckschicht aus Polyethylenterephthalat bzw. Polypropylen besteht.

Die beiden Deckschichten können ohne Einschränkung als Mono- oder Mehrschichtfolie ausgebildet sein. Wenn die Deckschichten oder eine der Deckschichten von einer vorzugsweise coextrudierten Mehrschichtfolie gebildet ist, so können die einzelnen Schichten grundsätzlich aus unterschiedlichen Materialien, gleichen Materialien sowie aus Materialien einer übereinstimmenden Produktgruppe gebildet sein. Beispielsweise können in einer Mehrschichtfolie mehrere Schichten aus unterschiedlichen Polypropylen- bzw. Polyethylenterephthalat-Typen gebildet sein.

In einer bevorzugten Ausgestaltung der Erfindung besteht das Trennmaterial aus Silikon, insbesondere aus einem lösungsmittelbasierten Silikon. Erfindungsgemäß ist das Trennmaterial zumindest an der ersten Deckschicht vorgesehen. Je nach Anforderungen können auch beide Deckschichten ein übereinstimmendes oder gegebenenfalls auch unterschiedlich ausgeführtes Trennmaterial aufweisen.

In einer Weiterbildung der Erfindung sind die Deckschichten jeweils über eine Klebstoffschicht z. B. auf der Basis von Polyurethan-Klebstoff (PU) oder einem Schmelzklebstoff mit der Kernschicht verbunden. Bei Polyurethan handelt es sich um ein Polymer, das zur Gruppe der chemisch-härtenden Klebstoffe gehört.

Das Flächengewicht der Klebstoffschicht liegt hierbei vorzugsweise in einem Bereich von 1 bis 5 g/m², vorzugsweise im Bereich von 2 bis 4 g/m².

Neben einer Schicht aus einem chemisch-härtenden Klebstoff, wie beispielsweise Polyurethan, ist auch eine Verbindung der Deckschichten mit der Kernschicht über einen Schmelzklebstoff, einem sogenannten Hotmelt, möglich. Hierbei erfolgt die Haftwirkung über eine physikalische Abhärtung. Schmelzklebstoffe sind bei Raumtemperatur fest und werden durch Aufschmelzen verarbeitbar. Der Schmelzklebstoff wird dabei im schmelzflüssigen Zustand aufgebracht, wobei eine Verbindung der Deckschicht mit der Kernschicht unmittelbar erfolgt und durch Abkühlung zu einer bleibenden Verbindung zwischen den Schichten führt. Die miteinander verbundenen Schichten können dabei von Walzen und/oder einem mitlaufenden Glättband abgestützt sein, um eine innige Verbindung sowie besonders glatte Oberflächen zu erreichen.

In einer bevorzugten Ausgestaltung der Erfindung weist die Kernschicht ein Flächengewicht im Bereich von 30 bis 100 g/m², vorzugsweise 40 bis 80 g/m², auf. Wie bereits zuvor beschrieben, weisen die Deckschichten aus orientiertem Polyethylenterephthalat und/oder Polypropylen gegenüber den aus dem Stand der Technik verwendeten Polyethylenschichten eine erhöhte Festigkeit und Steifigkeit auf.

Hierdurch kann auf voluminöse Kernschichten aus Fasermaterial, insbesondere Papier verzichtet werden bzw. diese deutlich schlanker ausgestaltet werden, da die Festigkeit und Steifigkeit des Trennverbundes nicht mehr vorrangig über die Kernschicht, sondern auch über die Deckschichten gewährleistet wird. Auf besonders vorteilhafte Weise lässt sich somit ein sehr viel dünnerer Trennverbund erreichen. Grundsätzlich ist die Erfindung aber nicht auf die genannten Flächengewichte beschränkt, so dass je nach Verwendung des Trennverbundes auch Fasermaterial mit einem höheren Flächengewicht die Kernschicht bilden kann. Die bevorzugten Schichtdickenbereiche verdeutlichen allerdings, dass durch die vorliegende Erfindung sehr geringe Flächengewichte für die Kernschicht möglich sind.

Wie bereits zuvor erläutert, ist bevorzugt eine Kernschicht aus Papier vorgesehen, wobei grundsätzlich auch andere Fasermaterialien im Rahmen der Erfindung in Betracht kommen.

Papier ist ein flächiger, im Wesentlichen aus Fasern meist pflanzlicher Herkunft bestehender Werkstoff, der durch Entwässerung einer Fasersuspension üblicherweise auf einem Sieb gebildet wird. Dabei entsteht ein Filz, der anschließend verdichtet und getrocknet wird.

Grundlage der Papiererzeugung sind Papierfaserstoffe, welche als Primärfaserstoffe aus pflanzlichen Rohstoffen, vorwiegend Holz und/oder als Sekundärfaserstoffe aus Altpapier gewonnen werden. Synthetische und mineralische Faserstoffe spielen üblicherweise eine untergeordnete Rolle, können jedoch auch als Beimischung vorhanden sein.

Im Rahmen der Erfindung kommen für die Kernschicht jedoch auch Kunststoffvliese in Betracht, welche auch als Nonwoven bezeichnet werden. Bei einem erfindungsgemäßen Flächengewicht von höchstens 100 g/m² und insbesondere bei einem Flächengewicht zwischen 20 und 100 g/m² ergibt sich eine typische Dicke des Nonwoven-Materials zwischen 40 und 250 µm. Geeignet sind beispielsweise Spunbond-Nonwoven, Carded-Nonwoven und Meltblown-Nonwoven, wobei auch unterschiedliche Nonwoven-Arten als Schichtfolge kombiniert werden können. Verbreitet und im Rahmen der Erfindung geeignet ist beispielsweise ein SMS-Nonwoven, bei dem eine Meltblown-Schicht zwischen Außenschichten aus Spunbond angeordnet ist.

Um geringe Herstellungskosten zu ermöglichen, sind Nonwoven auf der Basis von Polyolefin, insbesondere Polypropylen bevorzugt. Gerade wenn eine höhere thermische Beständigkeit gewünscht wird, können auch nichtpolyolefine Kunststoffe wie beispielsweise Polyethylenterephthalat oder Polyamid eingesetzt werden.

Gemäß einem weiteren Aspekt kann bei der Verwendung eines Nonwoven auch eine Anpassung an das Material der Deckschichten erfolgen, so dass dann der gesamte Trennverbund aus einem einheitlichen oder zumindest weitgehend einheitlichen Kunststoff gebildet ist. In Bezug auf die bevorzugten Materialien für die Deckschichten kann also insbesondere ein Nonwoven aus Polyester, insbesondere Polyethylenterephthalat oder aus Polypropylen vorgesehen sein. Es ergibt sich dann beispielsweise ein Schichtaufbau orientiertes PET/PET-Nonwoven/orientiertes PET bzw. orientiertes PP/PP-Nonwoven/orientiertes PP.

Ein weiterer wesentlicher Aspekt der Erfindung betrifft die Temperaturbeständigkeit des Trennverbundes. Wenn im Rahmen der Erfindung Deckschichten aus orientiertem PP oder orientiertem PET eingesetzt werden, ergibt sich zumindest bei einer kurzfristigen Erwärmung eine deutlich erhöhte Temperaturbeständigkeit im Vergleich zu bekannten Deckschichten aus Polyethylen.

Die Wärmebeständigkeit bekannter Trennpapierverbunde mit Deckschichten aus Polyethylen und einer Kernschicht aus Papier liegt die maximale Wärmebeständigkeit bei 120 bis 130°C. Aufgrund der in dem Papier stets vorhandenen Restfeuchte müssen aber gerade bei einer langfristigen Erwärmung niedrige Temperaturen von beispielsweise maximal 105°C eingehalten werden, weil ansonsten das zunächst in dem Papier gebundene Wasser verdampft und somit zu einer Schädigung des Trennverbundes selbst oder einer aufgebrachten Klebstoffschicht führen kann.

Bei den bekannten, üblichen Trennverbunden muss also häufig eine genaue Temperaturvorgabe eingehalten werden, wobei gerade im Hinblick auf eine möglichst vollständige Vernetzung einer aufgebrachten Silikonbeschichtung sowie im Hinblick auf die Prozessgeschwindigkeit grundsätzlich höhere Temperaturen erwünscht sind. Wie bereits zuvor beschrieben, kann durch Deckschichten aus orientiertem Polypropylen und insbesondere orientiertem Polyethylenterephthalat bei einer kurzfristigen Temperaturbelastung eine höhere Widerstandsfähigkeit erreicht werden.

Gemäß einer bevorzugten Ausgestaltung der Erfindung sind die Deckschichten aus einem teilkristallinen Polymer mit einem Schmelzpunkt Tₘ gemäß ISO 11357-3 von mehr als 130°C, insbesondere mehr als 140°C gebildet. Die Norm ISO 11357 beschäftigt sich mit der dynamischen Differenzkalorimetrie (DDK) bei Kunststoffen, wobei der Teil 3 konkret auf die Bestimmung der Schmelz- und Kristallisationstemperatur sowie der Schmelz- und Kristallisationsenthalpie Bezug nimmt.

Wenn dagegen gemäß einer Variante der Erfindung Nonwoven als Fasermaterial der Kernschicht verwendet wird, kann je nach Auswahl des Kunststoffmaterials eine deutlich erhöhte Temperaturbeständigkeit auch bei einer länger andauernden Erwärmung erreicht werden. Da bei einem Nonwoven-Material auf der Basis von Kunststoff in der Regel kein Wasser oder nur geringe Mengen an Wasser vorhanden sind, spielt das bei Papier übliche Verdampfen bei einer Kernschicht aus Nonwoven keine Rolle. Die Temperaturbeständigkeit wird dann im Wesentlichen durch den Schmelzpunkt der verwendeten Kunststoffe bestimmt, der für Polypropylen typischerweise in einem Bereich von 160 bis 165°C und für Polyethylenterephthalat in einem Bereich von typischerweise 250 bis 260°C liegt.

Durch eine Erhöhung der Verarbeitungstemperatur bei dem Aufbringen einer Silikonbeschichtung kann dann ein höherer Vernetzungsgrad erreicht werden, wobei auch ein geringerer Anteil an migrationsfähigen unvernetzten niedermolekularen Bestandteilen verbleibt. Entsprechende unvernetzte Oligomerbestandteile oder Monomerbestandteile können sich bezüglich der gewünschten Release-Funktion als auch bei einem Aufdruck negativ auswirken. Beispielsweise können unvernetzte Oligomer- bzw. Monomerbestandteile die Klebefähigkeit einer angrenzenden Klebstoffschicht in ungewünschter Weise reduzieren. Es ergibt sich des Weiteren der Vorteil, dass die Temperatur weniger genau überwacht und gesteuert werden muss, wobei auch höhere Bahngeschwindigkeiten ermöglicht werden.

Auch hinsichtlich der weiteren Verarbeitung des Trennverbundes ergeben sich bei einer höheren Temperaturbeständigkeit erhebliche Vorteile. Beispielsweise kann bei der Weiterverarbeitung des Trennverbundes eine Klebstoffschicht bei einer erhöhten Temperatur aufgebracht werden. Beispielsweise können auch Klebstoffe mit einer höheren Erweichungstemperatur aufgebracht werden, so dass sich damit auch Verbesserungen des Endproduktes bzw. des zunächst von dem Trennverbund geschützten Produktes in Form einer selbstklebenden Dekorfolie oder dergleichen ergeben.

In einer Weiterbildung der Erfindung weist zumindest eine der Deckschichten eine bevorzugt gleichmäßig verteilte Lochung auf. Ziel der Lochung ist es, dass sich die Feuchtigkeit gleichmäßig über die Fläche der Kernschicht verteilt und gleichmäßig in das Fasermaterial, insbesondere Papier eindringt. Außerdem wird eine gleichmäßige Abgabe der Feuchtigkeit bei temperaturbeaufschlagten Folgeprozessen ermöglicht und dadurch eine Blasenbildung vermieden. Hierdurch lässt sich die Wellung des Trennverbundes und damit die Oberflächengüte erheblich verbessern. In der Regel erfolgt eine derartige Lochung durch Nadelwalzen, deren Nadeln die zumindest eine Deckschicht durchdringen und bis in die Kernschicht reichen. Es ist jedoch auch möglich, die Lochung mittels eines Lasers zu erzeugen. Die Lochung erfolgt vorzugsweise am Trennschichtverbund. Alternativ kann jedoch auch die zumindest eine Deckschicht vor dem Auftragen auf die Kernschicht gelocht werden. Neben der bevorzugt gleichmäßig verteilten Lochung kommt auch eine ungleichmäßige Lochung mit einer nicht-einheitlichen Lochdichte in Betracht, wobei die Lochdichte an eine konkrete Form bzw. einen Zuschnitt des Trennverbundes angepasst sein kann.

In einer bevorzugten Weiterbildung weist die Kernschicht auf der der zweiten Deckschicht zugewandten Seite eine Bedruckung auf. Durch die Bedruckung der zweiten Seite der Kernschicht und der anschließenden Kaschierung mit der zweiten Deckschicht wird die Bedruckung zwischen der Kernschicht und der zweiten Deckschicht versiegelt und ist daher sehr beständig. Das Gleiche gilt, wenn alternativ an zumindest einer Deckschicht ein bei dem Trennverbund innenliegender Konterdruck vorhanden ist.

Neben dem erfindungsgemäßen Trennverbund umfasst die Erfindung aber auch ein Verfahren zur Herstellung des erfindungsgemäßen Trennverbundes gemäß Anspruch 11. Dieses Verfahren umfasst die Schritte:
- Bereitstellen einer Bahn aus Fasermaterial,
- Aufbringen einer ersten Deckschicht auf einer ersten Seite der Bahn aus Fasermaterial und
- Aufbringen einer zweiten Deckschicht auf einer zweiten Seite der Bahn aus Fasermaterial.

Das Verfahren ist dadurch gekennzeichnet, dass die erste und die zweite Deckschicht aus einem orientierten Polymer besteht, und zumindest die erste Deckschicht vor oder nach Aufbringen auf die Papierbahn auf der außenliegenden Seite mit einem Trennmaterial, bevorzugt Silikon, beschichtet wird.

Somit liegt es grundsätzlich im Rahmen der Erfindung eine bereits mit dem Trennmaterial beschichtete erste Deckschicht auf die Kernschicht aufzubringen oder im Anschluss an das Aufbringen der ersten Deckschicht diese mit dem Trennmaterial zu beschichten. Bevorzugt erfolgt die Beschichtung mit dem Trennmaterial jedoch erst in einem abschließenden Schritt, also nachdem bereits der Trennverbund sowohl mit der ersten als auch mit der zweiten Deckschicht hergestellt wurde. Dies hat den Vorteil, dass insbesondere bei Verwendung von empfindlichem Silikon als Trennmaterial, dieses keinem weiteren Verarbeitungsschritt ausgesetzt wird, bei dem die Schicht aus Trennmaterial beschädigt werden könnte. Eine Beschichtung der ersten Deckschicht mit Silikon vor dem Aufbringen auf die Kernschicht ist jedoch gerade dann denkbar, wenn eine niedrige thermische Belastung des Trennverbundes erwünscht ist.

In einer Weiterbildung der Erfindung wird jeweils vor dem Aufbringen der Deckschichten zur Herstellung einer Verbindung mit der Bahn aus Fasermaterial eine Klebstoffschicht auf die Bahn aus Fasermaterial oder auf die jeweilige Deckschicht aufgebracht wird. Als Klebstoff für die Klebstoffschicht kommt bevorzugt ein chemisch-aushärtender Klebstoff, wie beispielsweise Polyurethan-Klebstoff, zur Anwendung. Es liegt aber auch im Rahmen des erfindungsgemäßen Verfahrens einen Schmelzklebstoff zu verwenden.

Bei der Verwendung eines chemisch-abhärtenden Klebstoffes wird dieser zunächst auf die Bahn aus Fasermaterial oder auf die jeweilige Deckschicht aufgebracht, wo diese abtrocknet und vernetzt. Anschließend wird die jeweilige Deckschicht mit der innenliegenden Bahn aus Fasermaterial über die Klebstoffschicht laminiert.

In einer bevorzugten Ausgestaltung der Erfindung sind die erste und/oder die zweite Deckschicht aus biaxial orientiertem Polyethylenterephthalat (PET) hergestellt.

Alternativ sind die erste und/oder die zweite Deckschicht aus biaxial orientiertem Polypropylen (PP) hergestellt.

Wie bereits zuvor verdeutlicht, haben sowohl Polypropylen als auch Polyethylenterephthalat den Vorteil, dass sie gegenüber dem aus der Praxis verwendeten Polyethylen eine sehr viel höhere Festigkeit, Steifigkeit und Wärmebeständigkeit aufweisen.

In einer Weiterbildung des erfindungsgemäßen Verfahrens wird zumindest eine der Deckschichten mit einer Nadelwalze gelocht. Die Lochung erfolgt vorzugsweise nach Aufbringen der zumindest einen Deckschicht auf der Bahn aus Fasermaterial. Die Lochung kann sich dann bis in die Bahn aus Fasermaterial hinein erstrecken.

Gemäß einer bevorzugten Ausgestaltung der Erfindung wird vor dem Aufbringen der zweiten Deckschicht die Bahn aus Fasermaterial auf der zweiten Seite bedruckt. Durch das anschließende Aufbringen der zweiten Deckschicht wird die Bedruckung zwischen der zweiten Deckschicht und der Bahn aus Fasermaterial versiegelt. Hierdurch wird eine beständige Bedruckung erzielt. Ein geschützter Aufdruck kann zusätzlich oder alternativ auch an der ersten Deckschicht vorhanden sein, wobei wahlweise die Bahn aus Fasermaterial oder zumindest eine Deckschicht an der dem Fasermaterial zugewandten Seite bedruckt wird.

Im Folgenden wird die Erfindung anhand einer lediglich ein Ausführungsbeispiel darstellenden Zeichnung näher erläutert. Es zeigen
- Fig. 1: ein Trennverbund im Querschnitt,
- Fig. 2: den Trennverbund aus Fig. 1 mit Lochung im Querschnitt und
- Fig. 3: ein Verfahren zur Herstellung des Trennverbundes aus Fig. 1.

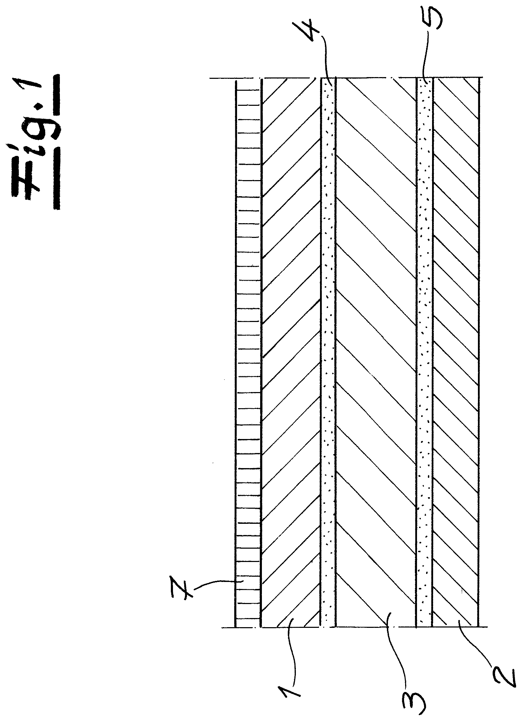

Die Fig. 1 zeigt beispielhaft einen Trennverbund zur ablösbaren Aufnahme einer klebenden Bahn im Querschnitt. Der Trennpapierverbund weist eine erste Deckschicht 1 und eine zweite Deckschicht 2 auf, zwischen die eine Kernschicht 3 aus Fasermaterial, in dem Ausführungsbeispiel aus Papier einkaschiert ist. Die erste Deckschicht 1 weist darüber hinaus eine außenliegende Beschichtung 7 aus Silikon auf.

Die Deckschichten 1, 2 bestehen aus biaxial orientiertem Polyethylenterephthalat (PET). Alternativ eignet sich auch biaxial orientiertes Polypropylen (PP).

Die Verbindung der einzelnen Deckschichten 1, 2 mit der Kernschicht 3 aus Papier erfolgt in dem gezeigten Ausführungsbeispiel durch jeweils eine erste Klebstoffschicht 4 und eine zweite Klebstoffschicht 5. Bei dem Klebstoff handelt es sich um einen chemisch-abhärtenden Zweikomponentenkleber auf der Basis von Polyurethan.

Bei dem Papier handelt es sich um satiniertes Papier, das beidseitig geglättet ist und daher auf beiden Seiten eine besonders niedrige Rauigkeit aufweist.

Eine besonders bevorzugte Ausgestaltung des in Fig. 1 erläuterten Aufbaus eines erfindungsgemäßen Trennpapierverbundes ist in der nachfolgenden Tabelle aufgeführt:

| Schicht | Material | Schichtdicke / Flächengewicht |
|---|---|---|
| Trennschicht | Silikon | 0,5 g/m² |
| Erste Deckschicht | BO-PET | 12 µm |
| Erste Klebstoffschicht | 2K - PU - Klebstoff | 3,0 g/m² |
| Kernschicht | satiniertes Papier | 60 g/m² |
| Zweite Klebstoffschicht | 2K - PU - Klebstoff | 3,0 g/m² |
| Erste Decksicht | BO-PET | 12 µm |

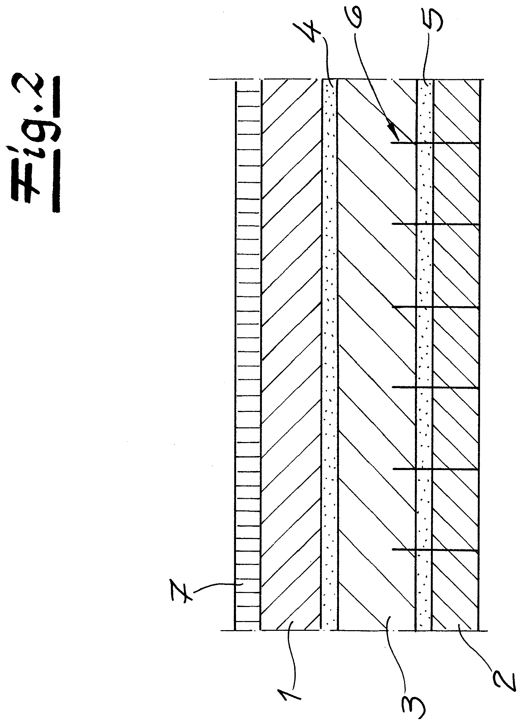

Die Fig. 2 zeigt den Trennpapierverbund gemäß der Fig. 1, wobei die Deckschicht 2 mit einer Lochung 6 versehen wurde, die bis in die Kernschicht 3 hineinreicht.

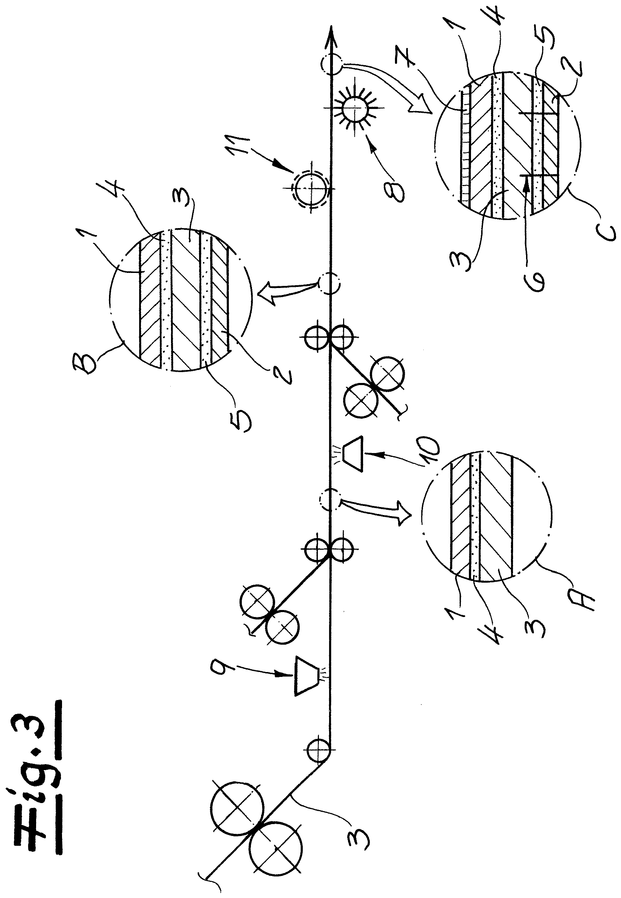

Die Fig. 3 zeigt das Herstellungsverfahren für den in Fig. 2 dargestellten Trennpapierverbund. Zunächst wird eine Papierbahn bereitgestellt, die in der Regel von einer Rolle abgewickelt wird. Diese Papierbahn bildet später die Kernschicht 3 des Trennpapierverbundes.

In einem ersten Schritt erfolgt das Auftragen einer ersten Klebstoffschicht 4 auf die erste Seite der Papierbahn 3 mittels einer Klebstoffauftragevorrichtung 9. Über die erste Klebstoffschicht 4 wird anschließend die erste Deckschicht 1 mit der die Kernschicht bildenden Papierbahn 3 laminiert.

Der Ausschnitt A verdeutlicht den sich zu diesem Verfahrenszeitpunkt herausgebildeten Aufbau des Trennpapierverbundes. Dieser weist zu diesem Zeitpunkt einen dreischichtigen Aufbau, bestehend aus der Kernschicht 3 der ersten Klebstoffschicht 4 und der ersten Deckschicht 1, auf.

Im weiteren Verfahrensschritt erfolgt zunächst das Aufbringen einer zweiten Klebstoffschicht 5 mittels einer zweiten Klebstoffauftragvorrichtung 10 auf der zweiten Seite der Papierbahn. Anschließend wird über die zweite Klebstoffschicht 5 die zweite Deckschicht 2 mit der Papierbahn laminiert. Grundsätzlich liegt es auch im Rahmen der Erfindung, dass die erste Klebstoffschicht 4 und die zweite Klebstoffschicht 5 nicht auf die Papierbahn sondern direkt auf die jeweilige Deckschicht 1, 2 aufgetragen werden und anschließend eine Laminierung mit der Papierbahn erfolgt.

Der Ausschnitt B verdeutlicht den zu diesem Zeitpunkt herausgebildeten Trennpapierverbund, der nunmehr einen fünfschichtigen Aufbau, bestehend aus der Kernschicht 3, den Klebstoffschichten 4, 5 und den Deckschichten 1, 2, aufweist.

In einem nächsten Verfahrensschritt erfolgt das Auftragen einer Beschichtung aus dem Trennmaterial 7, in dem vorliegenden Ausführungsbeispiel vorliegend Silikon, auf der ersten Deckschicht 1 mittels einer Auftragswalze 11. Es liegt im Rahmen der Erfindung, diesen Verfahrensschritt vorzuziehen, und beispielsweise zunächst die Deckschicht 1 mit der Beschichtung 7 zu versehen und diese erst anschließend mit der Papierbahn zu laminieren. Aufgrund der Empfindlichkeit der Beschichtung 7 ist es allerdings empfehlenswert diese erst abschließend auf den Trennpapierverbund aufzutragen.

Abschließend durchläuft der Trennpapierverbund eine Walzenanordnung mit einer an der zweiten Deckschicht 2 zugeordneten Nadelwalze 8, mit der eine Lochung 6 in die zweite Deckschicht 2 eingebracht wird, wobei die Lochung 6 sich bis in die Kernschicht 3 hineinerstreckt.

Der sich abschließend herausgebildete Trennpapierverbund ist im Ausschnitt C dargestellt und weist - ohne Berücksichtigung einer optionalen Drucklage - einen sechsschichtigen Aufbau bestehend aus der Kernschicht 3, den Klebstoffschichten 4, 5, den Deckschichten 1, 2 und der Beschichtung 7 aus Silikon auf.

Der Trennpapierverbund kann anschließend auf einer Rolle aufgewickelt werden und anschließend auf dieser Rolle für weitere Verarbeitungsschritte bereitgestellt werden.

## Patentansprüche

1. Trennverbund zur ablösbaren Aufnahme einer klebenden Bahn mit einer ersten Deckschicht (1) und einer zweiten Deckschicht (2) und einer zwischen den beiden Deckschichten (1, 2) einkaschierten Kernschicht (3) aus einem Fasermaterial, wobei zumindest die erste Deckschicht (1) eine außenliegende Beschichtung (7) aus einem Trennmaterial aufweist und wobei die Kernschicht (3) ein Flächengewicht von höchstens 150 g/m² aufweist,
**dadurch gekennzeichnet, dass**
die Deckschichten (1, 2) jeweils aus einer orientierten Polymerfolie bestehen.

2. Trennverbund nach Anspruch 1, **dadurch gekennzeichnet, dass** die Kernschicht (3) aus Papier gebildet ist.

3. Trennverbund nach Anspruch 1 oder 2, **dadurch gekennzeichnet, dass** die erste Deckschicht (1) und/oder die zweite Deckschicht (2) aus biaxialorientiertem Polyethylenterephthalat (PET) bestehen und eine Schichtdicke im Bereich von 6 µm bis 30 µm aufweisen.

4. Trennverbund nach einem der Ansprüche 1 bis 3, **dadurch gekennzeichnet, dass** die erste Deckschicht (1) und/oder die zweite Deckschicht (2) aus biaxialorientierem Polypropylen (PP) bestehen und eine Schichtdicke im Bereich von 15 µm bis 40 µm aufweisen.

5. Trennverbund nach Anspruch 1 bis 4, **dadurch gekennzeichnet, dass** das Trennmaterial (7) aus Silikon besteht.

6. Trennverbund nach Anspruch 1 bis 5, **dadurch gekennzeichnet, dass** die Deckschicht (1, 2) jeweils über eine Klebstoffschicht (4, 5) aus chemisch härtenden Klebstoff oder einem Schmelzklebstoff mit der Kernschicht (3) verbunden sind.

7. Trennverbund nach einem der Ansprüche 1 bis 6, **dadurch gekennzeichnet, dass** die Kernschicht (3) ein Flächengewicht im Bereich von 30 bis 100 g/m², vorzugsweise 40 bis 80 g/m², aufweist.

8. Trennverbund nach einem der Ansprüche 1 bis 7, **dadurch gekennzeichnet, dass** zumindest eine der Deckschichten (1, 2) eine gleichmäßig verteilte Lochung (6) aufweist.

9. Trennverbund nach einem der Ansprüche 1 bis 8, **dadurch gekennzeichnet, dass** die Kernschicht (3) auf der zweiten Deckschicht (2) zugewandten Seite eine Bedruckung aufweist.

10. Trennverbund nach einem der Ansprüche 1 bis 9, **dadurch gekennzeichnet, dass** die Deckschichten aus einem teilkristallinen Polymer mit einem Schmelzpunkt Tₘ gemäß ISO 11357-3 von mehr als 140°C gebildet sind.

11. Verfahren zur Herstellung eines Trennverbundes nach einem der Ansprüche 1 bis 10, umfassend die Schritte:
- Bereitstellen einer die Kernschicht bildenden Bahn aus Fasermaterial,
- Aufbringen einer ersten Deckschicht (1) auf einer ersten Seite der Bahn aus Fasermaterial und
- Aufbringen einer zweiten Deckschicht (2) auf einer zweiten Seite der Bahn aus Fasermaterial,
**dadurch gekennzeichnet, dass**
die erste Deckschicht (1) und die zweite Deckschicht (2) aus einem orientieren Polymer besteht und die erste Deckschicht (1) vor oder nach Aufbringen auf die Bahn aus Fasermaterial auf der außenliegenden Seite mit einem Trennmaterial, bevorzugt Silikon, beschichtet wird.

12. Verfahren zur Herstellung eines Trennverbundes nach Anspruch 11, **dadurch gekennzeichnet, dass** jeweils vor dem Aufbringen der Deckschicht (1, 2) zur Herstellung einer Verbindung auf die Bahn aus Fasermaterial eine Klebstoffschicht (4, 5) auf die Bahn aus Fasermaterial oder auf die jeweilige Deckschicht (1, 2) aufgebracht wird.

13. Verfahren zur Herstellung eines Trennverbundes nach einem der Ansprüche 11 oder 12, **dadurch gekennzeichnet, dass** zumindest eine der Deckschichten (1, 2) gleichmäßig gelocht wird.

14. Verfahren zur Herstellung eines Trennverbundes nach einem der Ansprüche 11 bis 13, **dadurch gekennzeichnet, dass** vor dem Aufbringen der zweiten Deckschicht (2) die Bahn aus Fasermaterial auf der der zweiten Deckschicht (2) zugeordneten Seite bedruckt wird.

## Claims

1. Separating composite for detachable holding of an adhesive web comprising a first cover layer (1) and a second cover layer (2) and a core layer (3) made of a fibre material laminated between the two cover layers (1, 2), wherein at least the first cover layer (1) has an outer coating (7) made of separating material and wherein the core layer (3) has a weight per unit area of at most 150 g/m2,
**characterized in that**
the cover layers (1, 2) each consist of an oriented polymer film.

2. Separating composite according to Claim 1, **characterized in that** the core layer (3) is formed from paper.

3. Separating composite according to Claim 1 or 2, **characterized in that** the first cover layer (1) and/or the second cover layer (2) consist of biaxially oriented polyethylene terephthalate (PET) and have a layer thickness in the range from 6 µm to 30 µm.

4. Separating composite according to one of Claims 1 to 3, **characterized in that** the first cover layer (1) and/or the second cover layer (2) consist of biaxially oriented polypropylene (PP) and have a layer thickness in the range from 15 µm to 40 µm.

5. Separating composite according to Claims 1 to 4, **characterized in that** the separating material (7) consists of silicone.

6. Separating composite according to Claims 1 to 5, **characterized in that** the cover layers (1, 2) are each connected to the core layer (3) by means of an adhesive layer (4, 5) made of chemically curing adhesive or a hotmelt adhesive.

7. Separating composite according to one of Claims 1 to 6, **characterized in that** the core layer (3) has a weight per unit area in the range from 30 to 100 g/m2, preferably 40 to 80 g/m2.

8. Separating composite according to one of Claims 1 to 7, **characterized in that** at least one of the cover layers (1, 2) has a uniformly distributed perforation (6).

9. Separating composite according to one of Claims 1 to 8, **characterized in that** the core layer (3) has a printing on the side facing the second cover layer (2).

10. Separating composite according to one of Claims 1 to 9, **characterized in that** the cover layers are formed from a partially crystalline polymer having a melting point Tₘ according to ISO 11357-3 of more than 140 °C.

11. Method for producing a separating composite according to one of Claims 1 to 10, comprising the steps:
- providing a web of fibre material forming the core layer,
- applying a first cover layer (1) to a first side of the web of fibre material and
- applying a second cover layer (2) to a second side of the web of fibre material,
**characterized in that**
the first cover layer (1) and the second cover layer (2) consist of an oriented polymer and the first cover layer (1) is coated with a separating material, preferably silicone, before or after application to the web of fibre material on the outer side.

12. Method for producing a separating composite according to Claim 11, **characterized in that** in each case before application of the cover layer (1, 2) to produce a connection to the web of fibre material, an adhesive layer (4, 5) is applied to the web of fibre material or to the respective cover layer (1, 2).

13. Method for producing a separating composite according to one of Claims 11 or 12, **characterized in that** at least one of the cover layers (1, 2) is uniformly perforated.

14. Method for producing a separating composite according to one of Claims 11 to 13, **characterized in that** before application of the second cover layer (2) the web of fibre material is printed on the side associated with the second cover layer (2).

## Revendications

1. Composite de séparation pour la réception séparable d'une bande collante comprenant une première couche de couverture (1) et une seconde couche de couverture (2) et une couche de noyau (3) en matériau de fibres dissimulée entre les deux couches de couverture (1, 2), dans lequel au moins la première couche de couverture (1) présente un premier revêtement (7) en matériau de séparation et dans lequel la couche de noyau (3) présente un poids surfacique d'au plus 150 g/m²,
**caractérisé en ce que**
les couches de couverture (1, 2) sont composées chacune d'un film polymère orienté.

2. Composite de séparation selon la revendication 1, **caractérisé en ce que** la couche de noyau (3) est en papier.

3. Composite de séparation selon la revendication 1 ou 2, **caractérisé en ce que** la première couche de couverture (1) et/ou la seconde couche de couverture (2) est/sont en polyéthylène téréphtalate (PET) orienté bi-axial et présente(nt) une épaisseur de couche dans la plage de 6 µm à 30 µm.

4. Composite de séparation selon l'une des revendications 1 à 3, **caractérisé en ce que** la première couche de couverture (1) et/ou la seconde couche de couverture (2) est/sont en polypropylène (PP) orienté bi-axial et présente(nt) une épaisseur de couche dans la plage de 15 µm à 40 µm.

5. Composite de séparation selon l'une des revendications 1 à 4, **caractérisé en ce que** le matériau de séparation (7) est en silicone.

6. Composite de séparation selon l'une des revendications 1 à 5, **caractérisé en ce que** les couches de couverture (1, 2) sont reliées à la couche de noyau (3) respectivement par une couche d'adhésif (4, 5) à durcissage chimique ou par une couche d'adhésif thermofusible.

7. Composite de séparation selon l'une des revendications 1 à 6, **caractérisé en ce que** la couche de noyau (3) présente un poids surfacique dans la plage de 30 à 100 g/m², de préférence de 40 à 80 g/m².

8. Composite de séparation selon l'une des revendications 1 à 7, **caractérisé en ce qu'**au moins une des couches de couverture (1, 2) présente des perforations (6) réparties régulièrement.

9. Composite de séparation selon l'une des revendications 1 à 8, **caractérisé en ce que** la couche de noyau (3) présente une impression sur la face tournée vers la couche de couverture (2).

10. Composite de séparation selon l'une des revendications 1 à 9, **caractérisé en ce que** les couches de couverture sont constituées d'un polymère partiellement cristallin avec un point de fusion Tₘ selon la norme ISO 11357-3 de plus de 140 °C.

11. Procédé de fabrication d'un composite de séparation selon l'une des revendications 1 à 10, comprenant les étapes :
- de fourniture d'une bande formant la couche de noyau,
- d'application d'une première couche de couverture (1) sur une première face de la bande en matériau de fibres et
- d'application d'une seconde couche de couverture (2) sur une seconde face de la bande en matériau de fibres,
**caractérisé en ce que**
la première couche de couverture (1) et la seconde couche de couverture (2) sont en un polymère orienté et la première couche de couverture (1) est revêtue sur la face extérieure d'un matériau de séparation, de préférence de la silicone, avant ou après l'application sur le lé en matériau de fibres.

12. Procédé de fabrication d'un composite de séparation selon la revendication 11, **caractérisé en ce que** respectivement avant l'application de la couche de couverture (1, 2) pour la fabrication d'une liaison sur le lé en matériau de fibres, une couche de colle (4, 5) est appliquée sur le lé en matériau de fibres ou sur la couche de couverture (1, 2) respective.

13. Procédé de fabrication d'un composite de séparation selon l'une des revendications 11 ou 12, **caractérisé en ce qu'**au moins une des couches de couverture (1, 2) est perforée de manière régulière.

14. Procédé de fabrication d'un composite de séparation selon l'une des revendications 11 à 13, **caractérisé en ce qu'**avant l'application de la seconde couche de couverture (2), le lé en matériau de fibres est imprimé sur la face correspondant à la seconde couche de couverture (2).
